Europäisches Patentamt

European Patent Office

Office européen des brevets

(19)

(11) **EP 1 353 322 A2**

(12) **EUROPEAN PATENT APPLICATION**

(43) Date of publication:
**15.10.2003 Bulletin 2003/42**

(51) Int Cl.[7]: **G10L 15/02**

(21) Application number: **03006601.3**

(22) Date of filing: **25.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK RO**

(30) Priority: **09.04.2002 IT TO20020306**

(71) Applicant: **Loquendo S.p.A.**
**10149 Torino (IT)**

(72) Inventors:
- **Gemello, Roberto**
  **10149 Torino (IT)**
- **Mana, Franco**
  **10149 Torino (IT)**

(74) Representative: **Giannesi, Pier Giovanni et al**
**Pirelli S.p.A.**
**Industrial Property Dept.**
**Viale Sarca, 222**
**20126 Milano (IT)**

(54) **Method for extracting voice signal features and related voice recognition system**

(57)     A method for extracting sampled voice signal features for an automatic voice recognition system essentially comprises the following steps:

- decomposing the sampled voice signal to obtain decomposition of the signal into a plurality of subbands by means of a digital bank of filters whose structure is that of a fully developed, symmetric binary tree (20), performing a discrete wavelet transform, each node (21, 23, ..) of the binary tree being associated to one of the subbands;
- employing all the subbands obtained by means of the binary tree (20) to generate the corresponding parameters representing the features extracted from the sampled voice signal.

Fig. 2

EP 1 353 322 A2

## Description

## Technical Field

The invention refers to automatic voice recognition systems in general and specifically refers to a method for extracting voice signal features for recognition.

## Background Art

An automatic voice recognition procedure may be schematically illustrated as a plurality of modules arranged in series between a voice signal input and a recognised sequence of words output:

- a first signal processing module acquires the input voice signal transforming it from analogue to digital and sampling it as required;
- a second feature extraction module computes a number of parameters which well describe the characteristics of the voice signal for recognition purposes;
- a third module uses time aligning and acoustic pattern matching algorithms; for example, a Viterbi algorithm may be used for time alignment, i.e. for managing temporal distortion induced by different utterance speeds, and prototype distances, Markovian state verisimilitudes or a posteriori probabilities generated by neural networks can be used for pattern matching;
- a fourth language analysis module extracts the best sequence of words (this module is only present in the case of continuous speech); for example, bigram or trigram models of regular grammars or words can be used.

In this model, the voice signal feature extraction procedure is inserted in the second module and forms a system called an "acoustic front-end" whose purpose is to process the voice signal to generate a compact parameteric representation for consequent synthetic representation of the information to be recognised.

Various types of front-ends are known in the art: the most common are MFCC (Mel Frequency Cepstral Coefficients) front-ends and PLP (Perceptual Linear Prediction) front-ends.

The MFCC front-end is based on the calculation of cepstral coefficients through Discrete Cosine Transform (DCT) after grouping the signal spectrum into critical bands (according to MEL base). The spectrum is obtained through FFT (Fast Fourier Transform). The corresponding differential parameters are calculated in 5 frames after deriving the cepstral coefficients and the energy for each frame (which corresponds to 10 ms of the voice signal) to provide dynamic indications.

The PLP (Perceptual Linear Prediction) front-end, on the other hand, is based on the voice parameter extraction technique derived from a variant of the LP (Linear Prediction) analysis technique, to which important characteristics of the human auditory model have been added.

The PLP technique introduces three fundamental perceptive elements by means of engineering approximations, namely spectrum analysis by dividing frequencies into critical bands, spectrum amplitude transformation according to a non-linear law and compression for modelling the relation between signal intensity and perceived signal power.

The objective of spectrum modifications to the speech spectrum is to obtain a spectrum which is more similar to the human listening model.

An improvement of the original PLP version consists in adding a RASTA (RelAtiveSpecTrAl) type analysis to this method.

The so-called RASTA-PLP method is based on the concept that the voice signal contains information from different sources some of which are irrelevant for speech voice recognition systems. Conventional speech analysis methods focused on short-term signal spectrum roughly represent the information contributions from various sources. The reduction of irrelevant information that may be performed by an automatic recognition module analysing a voice signal may increase efficacy during the system learning phase.

The objective of the RASTA-PLP method is to eliminate the components of the spectrum which vary slowly in time, whereby eliminating a number of non-linguistic phenomena deriving mainly from the signal transmission channel.

RASTA analysis implements a pass band filter with a passing band comprised in the range from 1 Hz to 12 Hz on the spectrum grouped into critical bands and carried onto a logarithmic scale. The high pass portion of the filter reduces the convolutive noise effect introduced by the channel, while the low pass component reduces the typical spectrum variations due to the performed short term analysis.

The front-end is a critical module in the automatic voice recognition process; specifically, MFCC and PLP front-ends based on FFT present two main problems:

1) In operative terms, the FFT is applied to small signal portions; the signal is convolved in a window which attenuates the edges (Hamming window) to avoid effects on the signal edges. This alters the signal spectrum.
2) FFT resolution is fixed and equal for all frequencies. Variable frequency time resolution would be preferred considering wider signal areas at low frequencies and narrow areas at high frequencies.

New sampled voice feature extraction methods employing the use of discrete wavelet transform have been recently introduced, an example of such technique is described in document EP 1 103 951.

According to the procedure described in said document, an acoustic signal, specifically a speech signal, is decomposed into subbands by means of a bank of digital filters whose structure is that of an asymmetric tree. The asymmetric tree structure is typical of discrete wavelet transform systems. The total of the nodes of the binary tree forms a so-called "wavelet packet" in which different bases, i.e. different sequences of nodes which cover all frequencies seamlessly, can be chosen to obtain different performance which is optimised for the different classes of sounds to be recognised.

Consequently, the procedure employs, within the wavelet packet, a different base for each class of sounds to be recognised.

The choice of a particular base therefore significantly affects the recognition capacity of the entire system. A certain choice may be used to optimise recognition of a particular class of sounds, but negatively affect other classes.

Object of the invention is to solve the problem of how to obtain very accurate recognition of a very wide set of sounds belonging to very different classes.

These and other objects are obtained by means of a method for extracting voice signal features and the respective voice recognition system as recited in the annexed claims.

**Summary of the invention**

Advantageously, according to the invention, a sampled voice signal is subjected to a transform in the time-frequency domain by means of a particular structure of digital filters, after which a set of significant parameters of the signal features are extracted. A method according to the invention comprises the steps of:

- decomposing a sampled voice signal to obtain a decomposition of the signal into a plurality of subbands by means of a digital bank of filters whose structure is that of a fully developed, symmetric binary tree, performing a discrete wavelet transform, wherein each node of the binary tree is associated to one of the subbands;
- employing all the subbands obtained by means of the binary tree to generate the corresponding parameters representing the features extracted from the sampled voice signal.

**Brief Description of Drawings**

Additional characteristics and advantages of the invention will now be described, by way of example only, with reference to the accompanying drawings wherein:

figure 1 is a block diagram of a method for extracting voice signal features according to the invention;

figure 2 is a schematic diagram that illustrates a filtering and subsampling tree; and

figure 3 is a table illustrating time and frequency resolutions for the tree in figure 2.

**Detailed description of the preferred embodiments**

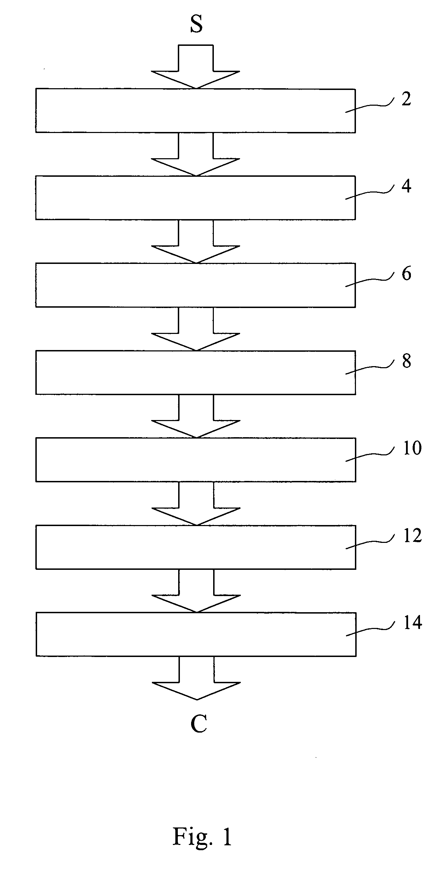

A method for extracting the features of a sampled voice signal S will now be described in detail with reference to figure 1. Figure 1 shows a block diagram of an acoustic front-end, of the wavelet or MRA (Multi Resolution Analysis) type, made according to the invention. The diagram in figure 1 comprises a sequence of seven blocks, from a first block 2, where a sampled voice signal S is input, to a block 14, which outputs the extracted features C.

We will now analyse the seven blocks forming the wavelet front-end shown in figure 1 in detail.

The first block 2 is a pre-emphasis block, which emphasises some of the frequencies to which the human ear is most sensitive.

The physiological characteristics of the human hearing system indicate sensitivity to increasing sound stimuli related to increases of frequency and increasingly less capacity of discriminating between adjacent bands. Filtering is required to emphasise the regions of the spectrum which are most important in terms of auditory perception in the frequencies to which the human ear is most sensitive. Filtering is carried out in the pre-emphasis block 2 by an FIR filter shown in the domain of transform z as:

$$H(z)=1-\alpha \cdot z^{-1}$$

where $\alpha$ = 0.95

The second block 4 groups the samples into frames.

The operation of grouping the samples into frames is carried out considering a window of N samples which is shifted by M samples at a time for the entire duration of the signal. The value of M is set to 80, which corresponds to 10 ms of a signal while different values have been experimentally used for the dimensions of the window N, the most significant being N=256 and N=384 (corresponding to 32 ms and 48 ms).

The possibility of enlarging the window N makes it possible to exploit variable time and frequency resolution, described in detail below, which is characteristic of wavelet development with respect to the simple Fourier transform.

The third block 6 filters the signal through a bank of digital filters performing a discrete wavelet transform to decompose the signal into subbands.

The wavelet filters employed in the filter block 6 are known in the art, e.g. those described in detail in I. W. Selesnick, "Formulas for Orthogonal IIR Wavelet Filters", IEEE Transactions on Signal Processing, Vol. 46, n. 4, p. 1138-1141, April, 1998. This class of orthogonal IIR wavelet filters with maximum flatness scaling can be implemented as the sum of two all pass filters and are consequently very efficient while providing good transition band characteristics. A particular type of this group of filters has a quasi linear phase and is consequently suitable for recognition.

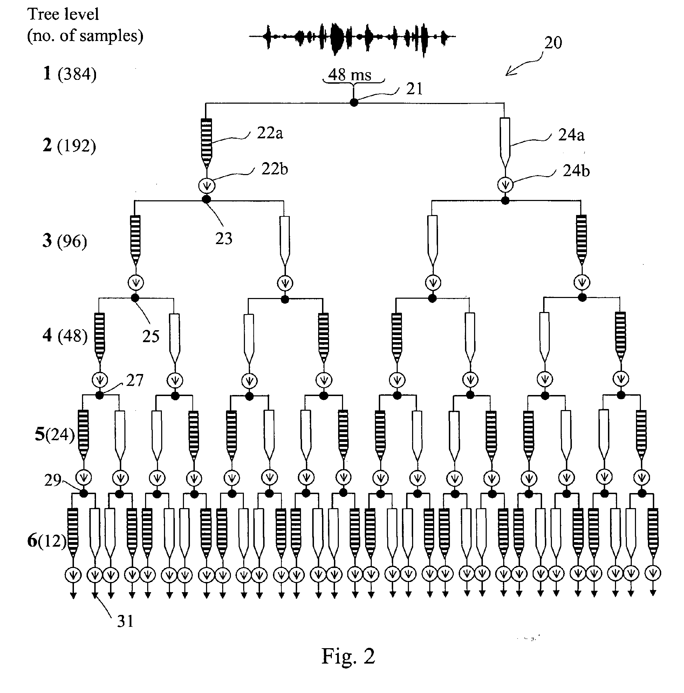

The digital bank of filters in block 6 has a binary tree structure similar to that shown in detail in figure 2, i.e. a fully developed, symmetric binary tree 20.

The number of levels of the tree may vary according to the dimensions of the input frames, 48 ms (384 samples) in this case, and to the number of parameters (corresponding to the number of nodes in the tree) to be calculated.

The figure shows the various levels of the tree, from level 1 of root 21 to level 6 of leaves 31. The different time frequency resolution (from 384 samples on level 1 to 12 samples on level 6) are shown in brackets. The bands become closer and samples become sparser down along the levels of the tree. Filtering is carried out, as explained in detail below, in a window of samples of the original signal, maintaining a memory of the previous windows.

The tree structure 20 in figure 2 consists of a cascade of low pass filter 22a and high pass 24a pairs, with a subsampling block 22b, 24b arranged downstream of each filter. The low pass filters are shown with a dotted line in figure 2. All the subsampling blocks have similar features and the subsampling operation is carried out using a factor of two.

As apparent, the low pass and high pass filter arrangement is not intuitive. There is no alternation of low pass and high pass filters on each level of tree because the arrangement must account for subsampling which returns the filtered signals to the base band and reverses the frequencies after a high pass filter (due to the frequencies conjugated by the Fourier transform of a real signal and periodical repetition).

The architecture of the analysis tree 20 therefore comprises all the nodes of a complete six level binary tree, which corresponds to considering 63 frequency bands, one for each node, with a frequency resolution from 4 kHz on the first node 21 of the tree to 125 Hz on the leaves 31.

The number of samples obtained in the filtering nodes of the tree decreases down the tree, but the time interval associated to the filtered samples does not change. Node 21 of the first level corresponds to a time interval of 384 samples, each node 23 of the second level corresponds to 192 samples, the nodes 25 of the third level to 96 samples, the nodes 27 of the fourth level to 48 samples, the nodes 29 of the fifth level to 24 samples and, finally, the leaves 31 of the last level correspond to 12 samples each.

According to the Heisenberg's uncertainty principle, there is a relation between time resolution and frequency resolution of samples in the various subbands. According to this principle, the product between time resolution and frequency resolution of a signal cannot be under a certain threshold.

In this case, considering that frequency resolution increases from the root 21 to the leaves 31 of the analysis tree, a different integration time interval can be considered on each level by applying the parameter extractor to the same number of samples per node and consequently the time interval between levels will be halved.

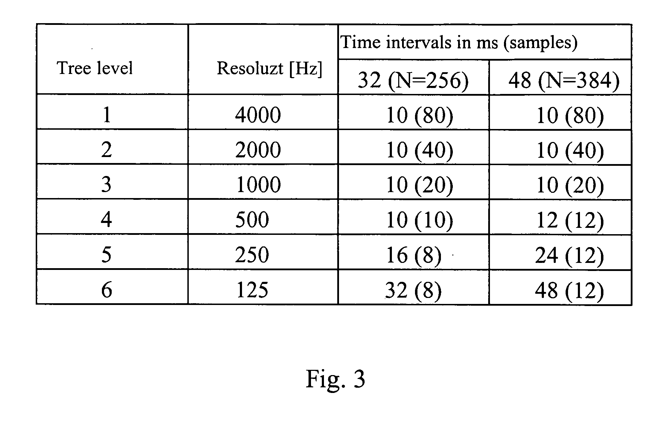

The table in figure 3 shows the frequency resolutions corresponding to each level of the tree. The last two columns present time intervals adopted for each integration level and for the two frame dimensions: N=256 samples (32 ms) and N=384 samples (48 ms). Specifically, the second case (N=384 samples, 48 ms) is that described above with reference to figure 2.

The time interval is halved, but must never be less than 10 ms, from level 6 (leaves) to level 1 (root). This means that some samples would never used in the integration and would consequently not be taken into account if the value were under this threshold, considering that the shift of the frame grouping window is M=80 samples (10 ms).

Referring again to the block diagram in figure 1, a integration operation is carried out in the fourth block 8 after the filtering operation carried out in block 6. The integration operation consists in extracting the parameters to be used in the recognition process from the samples obtained in the various subbands.

According to the invention, all 63 subbands are used to extract the corresponding voice parameters. The voice parameter extraction operation is applied to the samples resulting from the subbands by means of an integration operator.

The chosen integration operator is the mean energy calculation according to the following formula:

$$E = \frac{1}{N} \sum_{i=1}^{N} c_i^2$$

As a result of integration, there are 63 mean energy values calculated on the wavelet analysis tree 20, corresponding to different bands with different time-frequency resolution levels.

Advantageously, according to the invention, all 63 subbands (corresponding to all 63 the nodes in the tree 20) are employed to extract the features of the voice signal. This redundancy of information increases voice recognition accuracy of the system as a whole.

Subsequently, a compression operation followed by a parameter reduction operation (which is optional) is carried out in the fifth block 10.

After having extracted by integration the 63 energies from the wavelet decomposition tree, a logarithmic compression is carried out on them to reduce data dynamics that somehow simulates the response of the human ear to energy stimuli.

Compression type is:

$$y_i = \log[x_i] \ i = 1 \ldots N$$

After logarithmic compression, the number of parameters output by the front-end can be decreased without essentially loosing significant information. PCA (Principal Component Analysis) is used for this operation.

Principal Component Analysis is a data reduction method in which an alternative set of representative parameters for those extracted is sought so that the greater variability is condensed in the few parameters resulting from processing. The method is known in the art, see for example G. H. Duntenam, "Principal Component Analysis", Newbury Park, California: Sage Publications, 1989.

PCA consists in defining a linear transform for finding the directions of maximum variance of input data x and employs such directions for representing output data y.

In other words, by projecting input data onto the maximum variance directions, PCA transforms N statistically correlated elements into M elements which are not.

The directions along which the inputs are projected are called main components.

The objective of the Principal Component Analysis is to ensure that the variants of the most possible components are small enough to be negligible. In this way, the data set variations can be adequately described only by the components whose variances are not negligible. Dimensional reduction consists in seeking spatial directions which represent data most concisely. A certain saving of representation is therefore obtained without perceivable loss of information.

By applying the PCA method to the case of this example, 63 energies (compressed by the logarithmic operator) are reduced to 20 PCA parameters. The choice of the number of PCA parameters, 20 in this case, is not binding and depends on the dimensions of the following recognition stages (e.g. neural network).

The parameters previously obtained by filtering and integration, called voice parameters, could be used directly as inputs for the recognition system neural network, after being compressed using the PCA method. Nevertheless these parameters are essentially static, i.e. calculated at each frame. In speech recognition, time variations of the features must be taken into account from one frame to the next.

For this reason, the dynamic parameters $\Delta$ and $\Delta\Delta$ which are first and second temporal derivatives are calculated in the following block 12 of the diagram in figure 1. This calculation is intrinsically known and is normally implemented in MFCC and PLP front-ends.

The block 14 implements the so-called neural network. Data translation is carried out after logarithmic compression to return the data to zero mean value and variance 0.66, to keep within the activation linearity zone. This translation is carried out considering the train set data mean value and variance because these data are representative. Opinions in literature agree that this data scaling favours the speaker's independence and increases robustness with reference to noise. This last front-end element implemented in block 14 is also known in the art and is common to MFCC and PLP front-ends when neural network recognition systems are used.

The previously illustrated procedure is implemented in an automatic voice recognition system of the type essentially comprising:

- means for acquiring and sampling an input voice signal and for transforming the same signal into a sampled voice signal;
- means for extracting the features of the sampled voice signal made according to the method described above; and
- means for processing the features extracted by means of time alignment and/or pattern matching algorithms.

The described procedure may be implemented in the form of a computer program, i.e. as software which can be directly loaded into the internal memory of a computer comprising portions of software code which can be run by the computer to implement the procedure herein. The computer program is stored on a specific medium, e.g. a floppy disk, a CD-ROM, a DVD-ROM or the like.

Discrete wavelet transform specific to MRA, implemented by means of the previously described and illustrated bank of filters presents a number of advantages with respect to the known technique, specifically with respect to FFT transform used in MFCC and PLP front-ends:

- It extracts time samples from the signal (proper time signals are output by filters), while a signal power spectrum is obtained in the case of FFT.
- It implements a time-frequency variable resolution analysis. Thanks to the filtering, the samples obtained on the various levels of the analysis tree belong to an increasingly small frequency band. On the other hand, thanks to the subsampling, the samples correspond to an increasingly large time segment (time-frequency uncertainty principle). Time-frequency variable resolution is obtained by processing the samples obtained on the various levels of the tree. Resolution is fixed in the case of FFT for all frequencies and is determined by the number of samples to which the transform is applied.

- It implements a continuous signal filtering. Unlike FFT, the MRA front-end filters each sample individually instead of applying a Hamming window to the signal. Consequently, the spectrum of the signal is not altered (Gibbs effect) by the presence of the window. This is why there are no edge effects except for during filter memory initialisation. Additionally, the resolution of the spectrum line is no linked to the duration of the observation (the base of the window) but it is directly linked to the selected number of levels in the wavelet decomposition tree.

**Claims**

1. Method for extracting sampled voice signal features (S) for an automatic voice recognition system (S), **characterised in that** it comprises the following steps:

   - decomposing said sampled voice signal, by means of a digital bank of filters performing a discrete wavelet transform, to obtain a decomposition of the signal into a plurality of subbands, said digital bank of filters having a structure of a fully developed, symmetric binary tree (20), each node (21, 23, ..) of said binary tree being associated to one of said subbands;
   - employing substantially all said subbands to generate corresponding parameters representing the features extracted from said sampled voice signal.

2. Method as per claim 1, in which said binary tree structure consists of a cascade of low pass (22a) and high pass (24a) filter pairs with a subsampling block (22b, 24b) arranged downstream of each filter.

3. Method as per claim 2, in which each subsampling block operates a subsampling operation using a factor of two.

4. Method as per claim 1, in which each parameter representing features extracted from said sampled voice signal is generated by calculating the mean energy of the signal samples contained in the corresponding subband.

5. Method as per claim 4, further comprising a step in which a logarithm compression is worked on said parameters representing the features extracted from said sampled voice signal.

6. Method as per claim 5, further comprising, following the logarithmic compression step, a transformation step of said parameters in accordance with the Principal Component Analysis (PCA) method, for reducing and decorrelating the total number of parameters.

7. Method as per any of the preceding claims, in which said binary tree structure comprises six levels.

8. Method as per claim 7, in which said sampled voice signal is decomposed into sixty-three subbands.

9. Automatic voice recognition system of the type comprising:

   - means for acquiring and sampling an input voice signal (S), for transforming said signal (S) into a sampled voice signal;
   - means for extracting features from said sample voice signal;
   - means for processing said features extracted by means of time alignment and/or pattern matching algorithms;

   **characterised in that** said means for extracting features from said sampled voice signal comprise a feature extraction module in accordance with the method described in any one of the previous claims.

10. Software product directly storable in the internal memory of a computer comprising software code portions for implementing the method according to any of the claims from 1 to 8 when the software product is run on a computer.

S

Fig. 1

Fig. 2

| Tree level | Resoluzt [Hz] | Time intervals in ms (samples) | |
|---|---|---|---|
| | | 32 (N=256) | 48 (N=384) |
| 1 | 4000 | 10 (80) | 10 (80) |
| 2 | 2000 | 10 (40) | 10 (40) |
| 3 | 1000 | 10 (20) | 10 (20) |
| 4 | 500 | 10 (10) | 12 (12) |
| 5 | 250 | 16 (8) | 24 (12) |
| 6 | 125 | 32 (8) | 48 (12) |

Fig. 3